(19) Europäisches Patentamt
European Patent Office
Office européen des brevets

(11) EP 2 180 687 A1

(12) EUROPEAN PATENT APPLICATION

(43) Date of publication:
28.04.2010 Bulletin 2010/17

(51) Int Cl.:
H04N 1/405 (2006.01)

(21) Application number: 09173643.9

(22) Date of filing: 21.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 24.10.2008 JP 2008274866

(71) Applicant: Canon Kabushiki Kaisha
Tokyo 146-8501 (JP)

(72) Inventors:
• Takayama, Yuuji
  Tokyo, 146-8501 (JP)
• Ishikawa, Hisashi
  Tokyo, 146-8501 (JP)
• Saiki, Tomoyuki
  Tokyo, 146-8501 (JP)
• Araki, Go
  Tokyo, 146-8501 (JP)

(74) Representative: TBK-Patent
Bavariaring 4-6
80336 München (DE)

(54) **Image processing apparatus and image processing method**

(57) An input image analysis unit (100) analyzes the difference value between two pixels adjacent in the subscanning direction in an input image having the first number of tone levels. A vertical resolution conversion unit (101) averages the two pixels to generate average image data. A multi-level error diffusion processing unit (103) performs tone level conversion for the average image data to generate low-level image data. An output pixel selection unit (104) selects two output pixel values for each pixel of the low-level image data based on the analysis result of the input image analysis unit (100), thereby creating output image data having the second number of tone levels.

# FIG. 1

**Description**

BACKGROUND OF THE INVENTION

Field of the Invention

The present invention relates to an image processing apparatus and image processing method and, more particularly, to an image processing apparatus and image processing method for performing tone level conversion by an error diffusion method.

Description of the Related Art

In general, an image is digitally represented using multiple tone levels such as 256 levels. In particular, a color image is represented at multiple tone levels for each of R, G, and B color components or C, M, Y, and K color components.

However, it is difficult for general printers to reproduce a 256-level tone representation. Therefore, such printers adopt halftoning to convert multiple tone levels such as 256 levels into a smaller number of tone levels (for example, two or four levels) representable by a printer. A known example of the tone level conversion method is a multi-level error diffusion method capable of representing a 256-level image by two to four levels (see, for example, Japanese Patent Laid-Open No. 9-74488). According to this multi-level error diffusion method, when converting a 256-level image into a four-level one, the density value of a pixel of interest that is calculated by error diffusion is converted into a four-level value using a threshold table which makes 256 tone levels correspond to four levels. An error (residue) after the four-level conversion is held. In four-level conversion of the next pixel, the error held for the peripheral pixel is weighted and added. Then, the four-level conversion is repeated.

Depending on the image forming method of a printer, applying the multi-level error diffusion method may make unstable a dot around which no dot exits, that is, the dot of an isolated pixel. As a measure, adjacent pixels are processed as a block to collect pixels within the block in order to reduce the number of isolated pixels as much as possible.

However, processing to collect pixels within a block is complicated and increases the processing load. To reduce the processing load, there is proposed a method of averaging a plurality of pixels and then performing error diffusion. More specifically, image data corresponding to n (n is a natural number) pixels adjacent to each other in an input image are averaged, and multi-level error diffusion processing is executed for the average image data. Based on the image data obtained by the error diffusion processing, n image data represented by N tone levels (N is a natural number) are generated using a pattern set for each color. Image data corresponding to n pixels are generated (see, for example, Japanese Patent Laid-Open No. 2001-309188).

However, the conventional method of performing error diffusion processing after averaging n adjacent pixels may lose information of an original image upon averaging if the density difference between the n pixels is large. In this case, for example, the edge blurs, degrading an output image after error diffusion processing.

SUMMARY OF THE INVENTION

The present invention has been made to solve the above-described problems, and provides an image processing apparatus and image processing method for outputting a high-quality image by suppressing degradation of the image quality when a plurality of pixels are averaged to reduce the processing load of tone level conversion.

The present invention in its first aspect provides an image processing apparatus as specified in claims 1 to 10.

The present invention in its second aspect provides an image processing method of converting image data as specified in claims 11 and 12.

With this arrangement, the present invention can output a high-quality image by suppressing degradation of the image quality when a plurality of pixels are averaged to reduce the processing load of tone level conversion.

Further features of the present invention will become apparent from the following description of exemplary embodiments (with reference to the attached drawings).

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing the arrangement of an image processing apparatus in the first embodiment of the present invention;

Fig. 2 is a flowchart showing an image processing operation in the first embodiment;

Fig. 3 is a view exemplifying original image data in the first embodiment;

Fig. 4A is a view exemplifying image data before vertical resolution conversion in the first embodiment;

Fig. 4B is a view exemplifying image data after vertical resolution conversion in the first embodiment;

Fig. 5 is a view exemplifying pixel values corresponding to an input level in the first embodiment;

Fig. 6A is a view exemplifying selection of two output pixels when the difference value is equal to or smaller than a threshold in the first embodiment;

Fig. 6B is a view exemplifying selection of two output pixels when the difference value exceeds the threshold in the first embodiment;

Fig. 7 is a view exemplifying PWM processing in the first embodiment;

Fig. 8 is a block diagram showing the arrangement of an image processing apparatus in the second embodiment; and

Fig. 9 is a view exemplifying the correspondence between each of three input levels, and two output pixels in the second embodiment.

DESCRIPTION OF THE EMBODIMENTS

Preferred embodiments of the present invention will be described in detail below with reference to the accompanying drawings. Arrangements set forth in the following embodiments are merely examples, and the scope of the invention is not limited to the illustrative arrangements.

<First Embodiment>

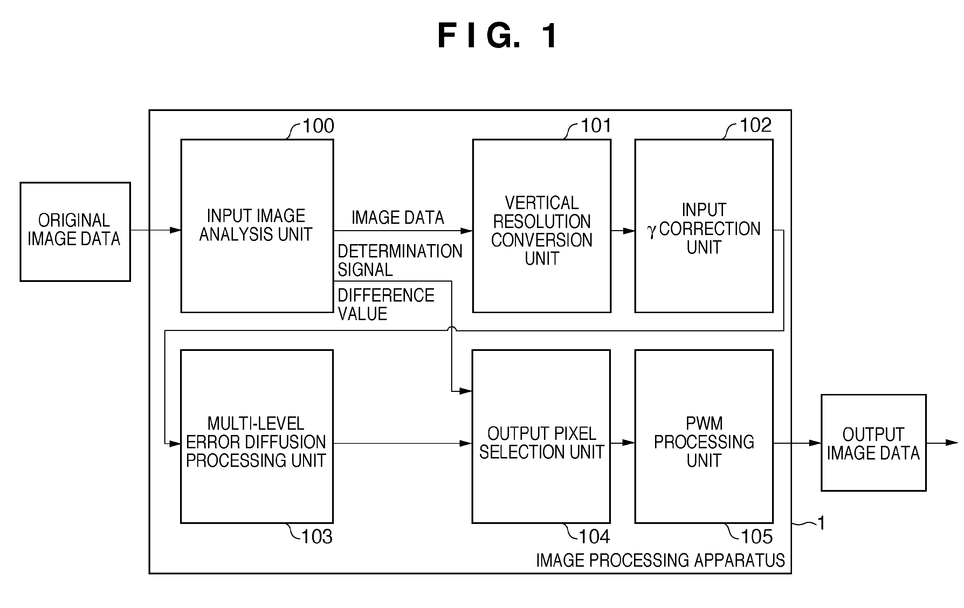

Fig. 1 is a block diagram showing the arrangement of an image processing apparatus 1 according to the first embodiment. As shown in Fig. 1, the image processing apparatus 1 in the first embodiment includes an input image analysis unit 100, vertical resolution conversion unit 101, input $\gamma$ correction unit 102, multi-level error diffusion processing unit 103, output pixel selection unit 104, and PWM processing unit 105. The input image analysis unit 100 is connected to the vertical resolution conversion unit 101 and output pixel selection unit 104. The vertical resolution conversion unit 101 is connected to the input $\gamma$ correction unit 102, and the input $\gamma$ correction unit 102 is connected to the multi-level error diffusion processing unit 103. The multi-level error diffusion processing unit 103 is connected to the output pixel selection unit 104, and the output pixel selection unit 104 is connected to the PWM processing unit 105. With this arrangement, the image processing apparatus 1 performs image processing (to be described later) for image data supplied to the input image analysis unit 100, and outputs the processed image data from the PWM processing unit 105. Image data supplied to the input image analysis unit 100 will be called original image data, and image data output from the PWM processing unit 105 will be called output image data.

In the first embodiment, original image data desirably has a linear relationship based on a predetermined scale (for example, density) when input to the input image analysis unit 100. However, even original image data having no linear relationship attains an ideal characteristic upon gamma correction by the input $\gamma$ correction unit 102.

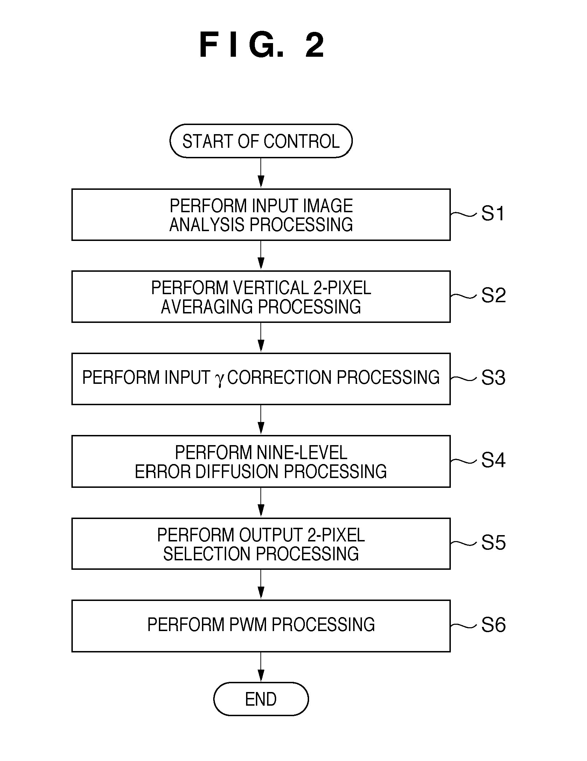

The operation of the image processing apparatus 1 with the arrangement shown in Fig. 1 according to the first embodiment will be explained with reference to the flowchart of Fig. 2. The following description is premised on that original image data is a CMYK color image and the number L of tone levels of each color is 256. Also, output image data is assumed to be equal in resolution to the original image data and undergo tone level conversion to convert the number N of tone levels to nine. The first embodiment executes processing for each pixel block. A variable n indicating the number of pixels adjacent in the subscanning direction in the pixel block is assumed to be 2, and every two pixels in the subscanning direction are processed.

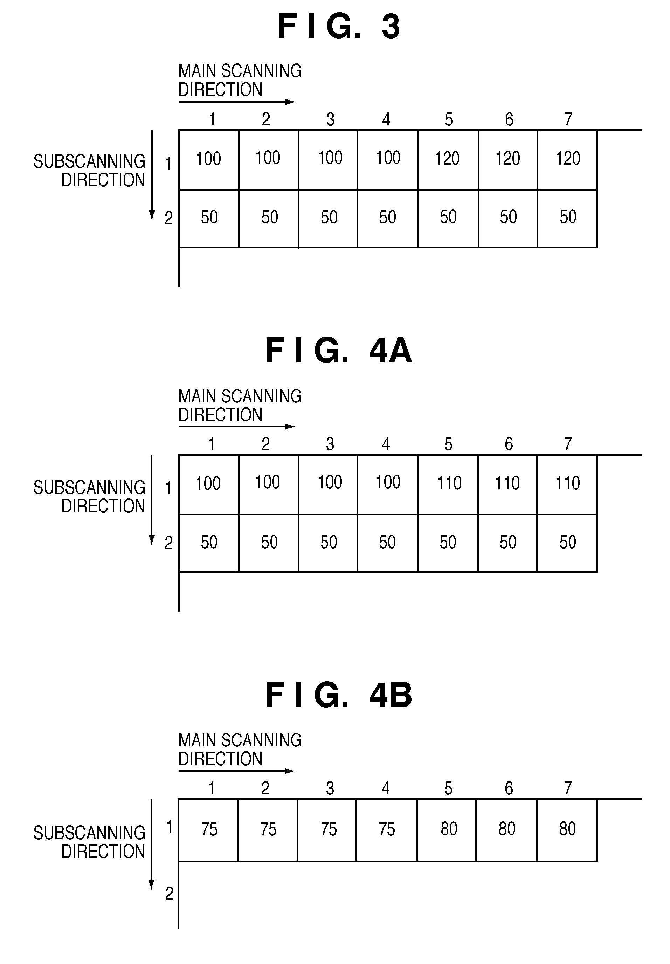

In step S1, the input image analysis unit 100 sequentially calculates differences each between the pixel values of two pixels adjacent in the subscanning direction, and compares each difference with a threshold. This processing will be explained in detail with reference to Fig. 3. Fig. 3 shows part (from the first to seventh pixels in the main scanning direction and the first and second pixels in the subscanning direction) of original image data. A figure in each pixel (corresponding to a square block) is a pixel value. First, the input image analysis unit 100 sequentially calculates, in the main scanning direction, the difference values of pixel blocks each formed from one pixel in the main scanning direction and two pixels in the subscanning direction:

$$\text{difference value} = |\text{pixel value of upper pixel} - \text{pixel value of lower pixel}| \quad \ldots(1)$$

In Fig. 3, the difference between pixel values in a pixel block of two pixels in the subscanning direction for the first pixel in the main scanning direction is |100 - 50| = 50 according to equation (1).

Then, the input image analysis unit 100 determines whether the calculated difference value is equal to or larger than a predetermined threshold. The input image analysis unit 100 outputs a 2-bit determination signal representing the determination result, and the difference value between the two target pixels to the output pixel selection unit 104. These signals are output at a timing to process the two target pixels by the output pixel selection unit 104.

The 2-bit determination signal also contains information representing which of the two target pixels has a larger pixel value. More specifically, the 0th bit of the determination signal represents which pixel value is larger. A 0th bit "1" means that an upper pixel value is larger, and "0" means that a lower pixel value is larger. The first bit of the determination signal represents whether the difference value exceeds a threshold. A first bit "1" means that the difference value exceeds the threshold, and "0" means that the difference value does not exceed the threshold.

Output of a difference value and generation of a determination signal by the input image analysis unit 100 will be explained using concrete numerical values. For example, in Fig. 3, the difference value in a pixel block of two pixels in the subscanning direction for the fifth pixel in the main scanning direction is |120 - 50| = 70 according to equation (1). When the threshold is 60, the difference value "70" exceeds the threshold. Together with the difference value "70", the input image analysis unit 100 outputs a determination signal to the output pixel selection unit 104 to represent that the difference value exceeds the threshold. In this case, an upper pixel value is larger than a lower one, so both the 0th and first bits of the determination signal are "1".

In the example shown in Fig. 3, the difference in a pixel block of two pixels in the subscanning direction for each of the first to fourth pixels in the main scanning direction is |100 - 50| = 50. The difference for each of the fifth to seventh pixels in the main scanning direction is |120 - 50| = 70. For the first to fourth pixels in the main scanning direction, the difference value does not exceed the threshold (60). Together with the difference value "50", the input image analysis unit 100 outputs a determination signal having "1" at the 0th bit and "0" at the first bit to the output pixel selection unit 104. For the fifth to seventh pixels in the main scanning direction, the difference value exceeds the threshold (60). Together with the difference value "70", the input image analysis unit 100 outputs a determination signal having "1" at the 0th bit and "1" at the first bit to the output pixel selection unit 104.

In this fashion, when the difference between the pixel values of pixels adjacent in the subscanning direction is large, the input image analysis unit 100 determines that these pixels correspond to an edge. The input image analysis unit 100 sends the information as a determination signal to the output pixel selection unit 104, retaining the edge characteristic in even output image data.

After the end of calculating the difference value and outputting the determination signal for all original image data by the input image analysis unit 100, the original image data is directly output to the vertical resolution conversion unit 101.

In step S2, the vertical resolution conversion unit 101 executes averaging processing for n pixels in the vertical direction (subscanning direction) in the original image data. The first embodiment exemplifies n = 2, so vertical 2-pixel averaging processing is done. More specifically, the values of two pixels successive in the subscanning direction are averaged to generate a new value (average image data) of one pixel:

$$\text{average image data} = (\text{pixel value of upper pixel} + \text{pixel value of lower pixel})/2 \quad \ldots(2)$$

The vertical 2-pixel averaging processing will be explained in detail with reference to Figs. 4A and 4B. Figs. 4A and 4B exemplify input and output image data in the vertical 2-pixel averaging processing. In Fig. 4A, the pixel values of two, upper and lower pixels are 100 and 50, respectively, in a pixel block of two pixels in the subscanning direction for the first pixel in the main scanning direction. This pixel block undergoes vertical 2-pixel averaging processing, calculating a corresponding pixel value "75" according to equation (2), as shown in Fig. 4B. In this manner, an average value "75" is calculated for the first to fourth pixels in the main scanning direction. Similarly, an average value "85" is calculated for the fifth to seventh pixels. Image data formed from the calculated average values as shown in Fig. 4B are sequentially output to the input γ correction unit 102. As is apparent from Fig. 4B, the vertical 2-pixel averaging processing halves the pixel count of the original image data in the subscanning direction. However, the pixel count will be doubled in step S5 to be described later, and finally obtained output image data becomes equal in size to the original image data.

In step S3, the input γ correction unit 102 performs γ correction processing for the resolution-converted image data.

In step S4, the multi-level error diffusion processing unit 103 performs, for example, nine-level error diffusion processing. More specifically, when quantizing 256 tone levels into nine levels, the density value of a pixel of interest that is calculated by error diffusion is converted into a nine-level value using a threshold table which makes 256 tone levels correspond to nine levels. An error (residue) after the nine-level conversion is held. In nine-level conversion of the next pixel, the error held for the peripheral pixel is weighted and added. Then, the nine-level conversion is repeated.

In step S5, the output pixel selection unit 104 selects image data of two pixels (pixel block) corresponding to nine input levels (tone levels) supplied from the multi-level error diffusion processing unit 103. The number of pixels selected by the output pixel selection unit 104 equals that of pixels averaged by the vertical resolution conversion unit 101. More specifically, two pixels to be output for one input pixel are selected to make the resolution of output image data equal to that of original image data before averaging.

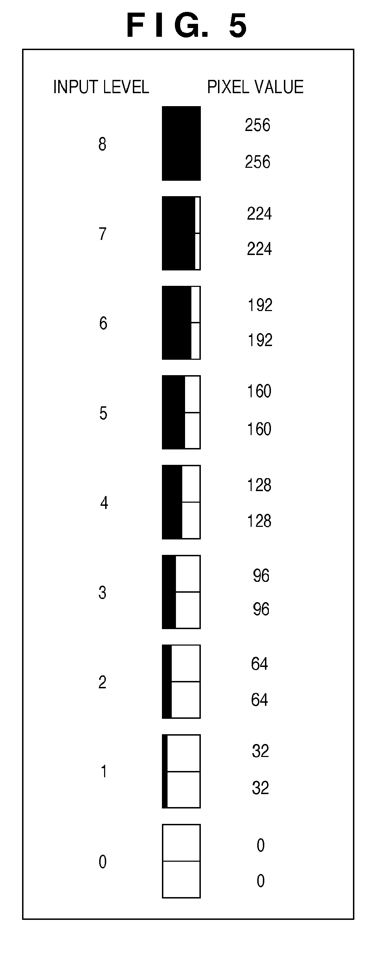

In the following example, nine input levels are 0, 1, 2, 3, 4, 5, 6, 7, and 8. Fig. 5 exemplifies two pixels (input level-compliant pixel values) corresponding to each input level in the first embodiment. The internal memory (not shown) of the output pixel selection unit 104 holds the input level-compliant pixel values in advance as output pixel selection targets. As shown in Fig. 5, in the first embodiment, the pixel values of two corresponding pixels are 0 for input level 0. Every time the input level rises by one, the pixel values of two corresponding pixels are increased by, for example, 32. Needless to say, input level-compliant pixel values are not limited to the example shown in Fig. 5.

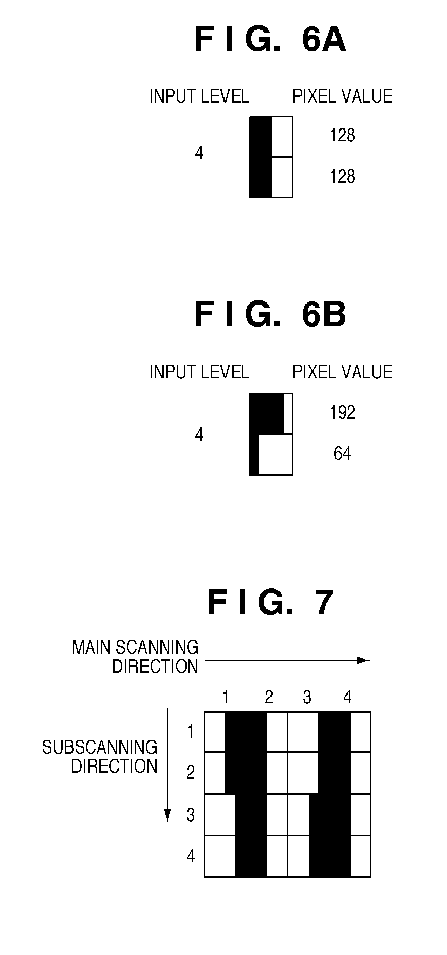

As described above, the output pixel selection unit 104 receives the difference value of a pixel block and a corresponding determination signal from the input image analysis unit 100. For example, when the output pixel selection unit 104 receives input level 4 and the first bit of a corresponding determination signal is 0 (difference value does not exceed the threshold), it selects two pixels corresponding to a pixel value "128" in Fig. 5 and outputs them to the PWM processing unit 105, as shown in Fig. 6A.

Output pixel selection processing when the first bit of the determination signal is 1 (difference value exceeds the threshold) will be explained. Assume that the input level supplied from the multi-level error diffusion processing unit 103 is 4, the difference value of a pixel block from the input image analysis unit 100 is 128, and both the 0th and first bits of the determination signal are 1. In this case, two selected pixels do not comply with the input level-compliant pixel values shown in Fig. 5.

The internal memory of the output pixel selection unit 104 holds in advance, as output pixel selection targets, image data (difference value-compliant pixel values) of two pixels which correspond to each difference value and are referred to when the difference value exceeds the threshold. When the first bit of the determination signal is 1, the output pixel selection unit 104 refers to the difference value-compliant pixel values. In this case, the difference value is 128, so the output pixel selection unit 104 selects, for example, 192 and 64 as two corresponding pixel values from the memory. Then, the output pixel selection unit 104 refers to the 0th bit of the determination signal to determine which of the upper and lower pixel values is set larger. In this case, since the 0th bit is 1, the output pixel selection unit 104 determines "192" as the upper pixel value and "64" as the lower pixel value so that the upper pixel value becomes larger than the lower one, as shown in Fig. 6B. The output pixel selection unit 104 outputs the two pixels having pixel values determined in this way to the PWM processing unit 105.

A comparison between Figs. 6A and 6B reveals that the average pixel value of two output pixels is 128 in the two examples, but output pixel values are selected to reproduce the edge characteristic of the image much more in the example of Fig. 6B in which the difference value in original image data is larger.

Based on the determination signal from the input image analysis unit 100, the output pixel selection unit 104 can generate an output image to reproduce the edge characteristic of original image data.

In step S6, the PWM processing unit 105 performs pulse width modulation (PWM) processing to stably output print dots. Fig. 7 is a view exemplifying pulse width modulation by PWM processing in the first embodiment. In the first embodiment, a dot is grown from right for odd-numbered pixel data in the main scanning direction and left for even-numbered one among pixel data input from the output pixel selection unit 104, shown in Fig. 7. By controlling growth of dots, adjacent dots can be represented as a cluster, achieving more stable dot formation. After the end of the PWM processing in step S6, the image processing apparatus 1 in the first embodiment completes the output image data.

As described above, according to the first embodiment, analysis information such as an error in original image data is held prior to averaging adjacent pixels. After the end of error diffusion processing for pixels reduced in number by averaging, output pixel values are controlled based on the analysis information. Hence, a high-quality output image can be obtained quickly without losing the edge characteristic of the original image data.

Further, PWM processing is done to control the dot growth direction based on the analysis information. More stable dots can be formed on a print sheet.

As described above, in the first embodiment, the number of tone levels of original image data is 256, output image data is equal in resolution to the original image data and has nine tone levels, and the number of pixels in the subscanning direction serving as an averaging unit in a pixel block is 2. However, the present invention is not limited to this example, and is applicable to an image processing apparatus and image processing method for converting image data having the first number of tone levels into image data having the second number of tone levels smaller than the first one. In this case, a plurality of pixels adjacent in the subscanning direction in an input image are averaged after analyzing their difference value. Based on the analysis result, a plurality of output pixel values are selected. That is, a different number of tone levels and a different number of pixels to be averaged are settable.

In the first embodiment, 256 tone levels of original image data are reduced to nine tone levels corresponding to output image data by multi-level error diffusion processing. The number of tone levels after multi-level error diffusion processing in the present invention suffices to be smaller than that of original image data, and need not be equal to that of output image data. For example, original image data of L tone levels undergoes multi-level error diffusion processing to obtain low-level image data of M tone levels (M < L). When selecting output pixels for the image data of M tone levels, pixel values are assigned to implement N tone levels (N ≤ M), creating output image data. More specifically, multi-level error diffusion processing converts image data having the first number L of tone levels into low-level image data having the number M of tone levels which is equal to or larger than the second number of tone levels. When selecting output pixels, the M-level image data is converted into output image data having the second number N of tone levels.

<Second Embodiment>

The second embodiment according to the present invention will be described.

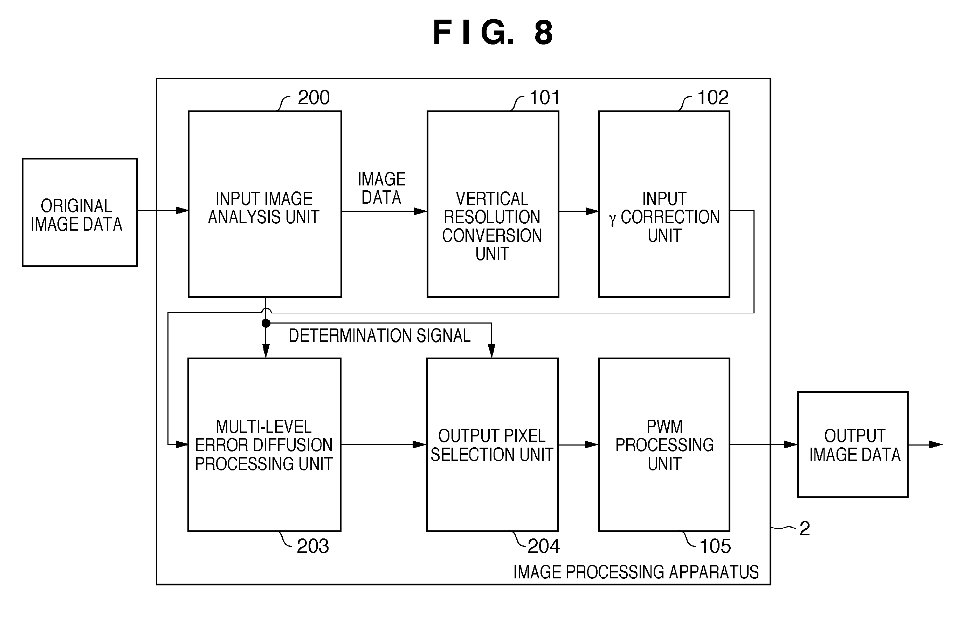

Fig. 8 is a block diagram showing the arrangement of an image processing apparatus 2 according to the second embodiment. As shown in Fig. 8, the image processing apparatus 2 in the second embodiment has almost the same arrangement as that of the image processing apparatus 1 in the first embodiment. The second embodiment is different from the first embodiment in the operations of an input image analysis unit 200, multi-level error diffusion processing unit 203, and output pixel selection unit 204.
The input image analysis unit 200 generates a 2-bit determination signal based on a difference value in a pixel block, similar to the first embodiment, and outputs only the determination signal to the multi-level error diffusion processing unit 203 and output pixel selection unit 204. The structure of the determination signal is the same as that in the above-described first embodiment. In the second embodiment, the multi-level error diffusion processing unit 203 switches the quantized value of multi-level error diffusion in accordance with the determination signal.
The operation of the image processing apparatus 2 with the arrangement shown in Fig. 8 according to the second embodiment will be explained in detail. Image processing in the second embodiment is basically the same as that of the flowchart shown in Fig. 2 in the first embodiment. The following description is premised on that original image data is a CMYK color image, the number L of tone levels of each color is 256, output image data is equal in resolution to the original image data, and the number N of tone levels of the output image data is 9 or 3. Also, the number n of pixels adjacent in the subscanning direction serving as a processing unit in a pixel block is assumed to be 2.
In step S1, the input image analysis unit 200 performs input image analysis processing. Unlike the first embodiment, the input image analysis unit 200 outputs a 2-bit determination signal obtained by the analysis to the multi-level error diffusion processing unit 203 and output pixel selection unit 204.
Vertical 2-pixel averaging processing in step S2 and input γ correction processing in step S3 are the same as those in the first embodiment.
The operation of the multi-level error diffusion processing unit 203 in step S4 will be explained. As the multi-level error diffusion processing in the second embodiment, three-level error diffusion processing and nine-level error diffusion processing are executed. The three-level error diffusion processing is implemented by the same method as nine-level error diffusion processing described in the first embodiment except for the quantized value. More specifically, 256 tone levels are converted into three levels using a threshold table which makes 256 tone levels correspond to three levels. The multi-level error diffusion processing unit 203 switches applied processing between three-level error diffusion processing and nine-level error diffusion processing based on a determination signal output from the input image analysis unit 200. For example, when the first bit of the determination signal is 1 to represent that the difference value exceeds the threshold, a corresponding pixel is regarded to be an edge. To emphasize the edge, three-level error diffusion processing is executed. In contrast, when the first bit of 0 to represent that the difference value does not exceed the threshold, a corresponding pixel is regarded not to be an edge. To reproduce a smooth tone representation, nine-level error diffusion processing is executed.
The operation of the output pixel selection unit 204 in step S5 will be explained. In the output pixel selection unit 204, the number of levels of input image data changes depending on the type (three/nine levels) of error diffusion processing executed by the multi-level error diffusion processing unit 203. The output pixel selection unit 204 receives nine input levels (tone levels) 0, 1, 2, 3, 4, 5, 6, 7, and 8 when nine-level error diffusion processing has been done, and three input levels (tone levels) 0, 1, and 2 when three-level error diffusion processing has been done. The output pixel selection unit 204 receives a determination signal from the input image analysis unit 200, too. Based on the first bit representing whether the difference value exceeds the threshold, the output pixel selection unit 204 can determine the type of executed error diffusion processing. More specifically, the output pixel selection unit 204 determines that three-level error diffusion processing has been performed when the first bit of the determination signal is 1, and nine-level error diffusion processing has been performed when the first bit is 0.

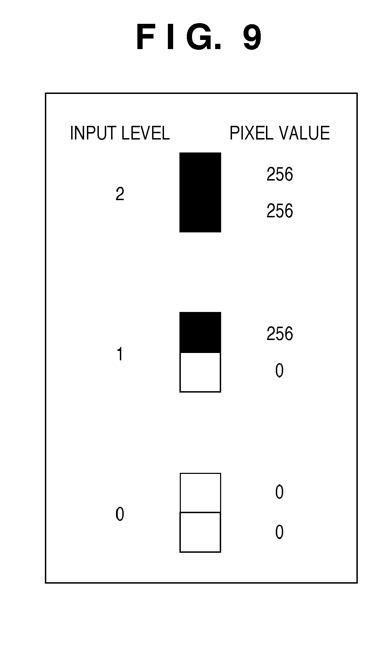

Fig. 9 exemplifies two pixels corresponding to each input level in three-level error diffusion processing. Referring to Fig. 9, the pixel values of two corresponding pixels are 0 for input level 0 after three-level error diffusion processing.

For input level 1, the pixel value of one of two pixels is 255 and that of the other is 0. For input level 2, the pixel values of two corresponding pixels are 255. Hence, when the input level in three-level error diffusion processing is 1 and the first and 0th bits of the determination signal are 1, the output pixel selection unit 204 sets "255" as the pixel value of an upper one of two pixels to be output to a PWM processing unit 105 and "0" as that of a lower pixel.

In this manner, when performing three-level error diffusion processing, the output pixel selection unit 204 can select appropriate output pixels without holding image data (difference value-compliant pixel values) of two pixels corresponding to each difference value in the internal memory, unlike the output pixel selection unit 104 in the first embodiment. Output pixel selection processing upon executing nine-level error diffusion processing (difference value is equal to or smaller than the threshold in the second embodiment) is the same as that in the first embodiment, and a description thereof will not be repeated.

PWM processing in step S6 is the same as that in the first embodiment.

In the second embodiment, three- and nine-level error diffusion processes are switched based on the determination signal representing the edge characteristic of original image data. However, the present invention is not limited to this example, and the quantized value of multi-level error diffusion processing suffices to be switched properly in accordance with the edge characteristic.

As described above, according to the second embodiment, analysis information of original image data is held prior to averaging adjacent pixels. After the end of error diffusion processing for pixels reduced in number by averaging, multi-level error diffusion processing is switched based on the analysis information. Especially when low-level (three-level in the second embodiment) error diffusion processing is performed, a high-quality output image which further emphasizes an edge can be obtained quickly without holding pixel values corresponding to a difference value in the output pixel selection unit 204.

It is effective to simultaneously implement the first and second embodiments. That is, the first and second embodiments are switched for each target color. For example, the first embodiment is applied to C and Y out of C, M, Y, and K, and the second embodiment is applied to M and K. Error diffusion processing suited to the color can be achieved, further improving the image quality.

<Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. An input image analysis unit (100) analyzes the difference value between two pixels adjacent in the subscanning direction in an input image having the first number of tone levels. A vertical resolution conversion unit (101) averages the two pixels to generate average image data. A multi-level error diffusion processing unit (103) performs tone level conversion for the average image data to generate low-level image data. An output pixel selection unit (104) selects two output pixel values for each pixel of the low-level image data based on the analysis result of the input image analysis unit (100), thereby creating output image data having the second number of tone levels.

**Claims**

1. An image processing apparatus which converts image data having a first number of tone levels into image data having a second number of tone levels smaller than the first number of tone levels, the apparatus comprising:

an input image analysis unit configured to analyze a difference value between a plurality of pixels adjacent in a subscanning direction in an input image having the first number of tone levels;
an averaging unit configured to average the plurality of pixels upon the analysis to generate average image data having a decreased number of pixels;
a tone level conversion unit configured to perform tone level conversion to decrease the number of tone levels of the average image data, thereby generating low-level image data; and
an output pixel selection unit configured to select a plurality of output pixel values for each pixel of the low-level image data based on an analysis result by said input image analysis unit, thereby creating output image data having the second number of tone levels.

2. The apparatus according to claim 1, wherein
   when the difference value is not larger than a predetermined threshold, said output pixel selection unit selects a pair of output pixel values set in advance for a pixel value of the low-level image data, based on the analysis result by said input image analysis unit, and
   when the difference value exceeds the threshold, said output pixel selection unit selects a pair of output pixel values set in advance for the difference value.

3. The apparatus according to claim 1 or 2, wherein said tone level conversion unit performs tone level conversion by multi-level error diffusion processing for the average image data, thereby generating the low-level image data.

4. An image processing apparatus which converts image data having a first number of tone levels into image data having a second number of tone levels smaller than the first number of tone levels, the apparatus comprising:

   an input image analysis unit configured to analyze a difference value between a plurality of pixels adjacent in a subscanning direction in an input image having the first number of tone levels;
   an averaging unit configured to average the plurality of pixels upon the analysis to generate average image data having a decreased number of pixels;
   a tone level conversion unit configured to perform tone level conversion based on an analysis result by said input image analysis unit to decrease the number of tone levels of the average image data, thereby generating low-level image data; and
   an output pixel selection unit configured to select a plurality of output pixel values for each pixel of the low-level image data, thereby creating output image data having the second number of tone levels.

5. The apparatus according to claim 4, wherein said tone level conversion unit performs tone level conversion by switching a quantized value in multi-level error diffusion processing, based on an analysis result by said input image analysis unit.

6. The apparatus according to any one of claims 1 to 5, wherein said input image analysis unit determines whether a difference value between two pixels adjacent in the subscanning direction in an input image is not smaller than a predetermined threshold.

7. The apparatus according to any one of claims 1 to 6, wherein said output pixel selection unit selects output pixel values equal in number to pixels to be averaged by said averaging unit.

8. The apparatus according to any one of claims 1 to 7, wherein said output pixel selection unit holds in advance pixel values to be selected as the plurality of output pixel values.

9. The apparatus according to any one of claims 1 to 8, further comprising a PWM processing unit configured to perform pulse width modulation to control a dot growth direction based on the analysis result by said input image analysis unit in order to form a print data corresponding to the output image data.

10. The apparatus according to any one of claims 1 to 9, wherein said tone level conversion unit generates the low-level image data having the number of tone levels smaller than the first number of tone levels and not smaller than the second number of tone levels.

11. An image processing method of converting image data having a first number of tone levels into image data having a second number of tone levels smaller than the first number of tone levels, the method comprising:

   an input image analysis step of analyzing a difference value between a plurality of pixels adjacent in a subscanning direction in an input image having the first number of tone levels;
   an averaging step of averaging the plurality of pixels upon the analysis to generate average image data having a decreased number of pixels;
   a tone level conversion step of performing tone level conversion to decrease the number of tone levels of the average image data, thereby generating low-level image data; and
   an output pixel selection step of selecting a plurality of output pixel values for each pixel of the low-level image data based on an analysis result in the input image analysis step, thereby creating output image data having the second number of tone levels.

12. An image processing method of converting image data having a first number of tone levels into image data having a second number of tone levels smaller than the first number of tone levels, the method comprising:

an input image analysis step of analyzing a difference value between a plurality of pixels adjacent in a subscanning direction in an input image having the first number of tone levels;
an averaging step of averaging the plurality of pixels upon the analysis to generate average image data having a decreased number of pixels;
a tone level conversion step of performing tone level conversion based on an analysis result in the input image analysis step to decrease the number of tone levels of the average image data, thereby generating low-level image data; and
an output pixel selection step of selecting a plurality of output pixel values for each pixel of the low-level image data, thereby creating output image data having the second number of tone levels.

13. A program for causing a computer to function as each unit in an image processing apparatus defined in any one of claims 1 to 10.

14. A computer-readable storage medium storing a program defined in claim 13.

EP 2 180 687 A1

# FIG. 2

```
        ( START OF CONTROL )
                 │
                 ▼
   ┌─────────────────────────────┐
   │   PERFORM INPUT IMAGE        │ ～ S1
   │   ANALYSIS PROCESSING        │
   └─────────────────────────────┘
                 │
                 ▼
   ┌─────────────────────────────┐
   │  PERFORM VERTICAL 2-PIXEL    │ ～ S2
   │  AVERAGING PROCESSING        │
   └─────────────────────────────┘
                 │
                 ▼
   ┌─────────────────────────────┐
   │ PERFORM INPUT γ CORRECTION   │ ～ S3
   │ PROCESSING                   │
   └─────────────────────────────┘
                 │
                 ▼
   ┌─────────────────────────────┐
   │   PERFORM NINE-LEVEL         │ ～ S4
   │   ERROR DIFFUSION PROCESSING │
   └─────────────────────────────┘
                 │
                 ▼
   ┌─────────────────────────────┐
   │   PERFORM OUTPUT 2-PIXEL     │ ～ S5
   │   SELECTION PROCESSING       │
   └─────────────────────────────┘
                 │
                 ▼
   ┌─────────────────────────────┐
   │   PERFORM PWM PROCESSING     │ ～ S6
   └─────────────────────────────┘
                 │
                 ▼
              ( END )
```

# F I G. 3

MAIN SCANNING
DIRECTION →

|   | 1 | 2 | 3 | 4 | 5 | 6 | 7 |
|---|---|---|---|---|---|---|---|
| 1 | 100 | 100 | 100 | 100 | 120 | 120 | 120 |
| 2 | 50 | 50 | 50 | 50 | 50 | 50 | 50 |

SUBSCANNING
DIRECTION ↓

# F I G. 4A

MAIN SCANNING
DIRECTION →

|   | 1 | 2 | 3 | 4 | 5 | 6 | 7 |
|---|---|---|---|---|---|---|---|
| 1 | 100 | 100 | 100 | 100 | 110 | 110 | 110 |
| 2 | 50 | 50 | 50 | 50 | 50 | 50 | 50 |

SUBSCANNING
DIRECTION ↓

# F I G. 4B

MAIN SCANNING
DIRECTION →

|   | 1 | 2 | 3 | 4 | 5 | 6 | 7 |
|---|---|---|---|---|---|---|---|
| 1 | 75 | 75 | 75 | 75 | 80 | 80 | 80 |
| 2 |   |   |   |   |   |   |   |

SUBSCANNING
DIRECTION ↓

# F I G. 5

| INPUT LEVEL | | PIXEL VALUE |
|---|---|---|
| 8 | | 256 |
| | | 256 |
| 7 | | 224 |
| | | 224 |
| 6 | | 192 |
| | | 192 |
| 5 | | 160 |
| | | 160 |
| 4 | | 128 |
| | | 128 |
| 3 | | 96 |
| | | 96 |
| 2 | | 64 |
| | | 64 |
| 1 | | 32 |
| | | 32 |
| 0 | | 0 |
| | | 0 |

# F I G. 6A

| INPUT LEVEL | | PIXEL VALUE |
|---|---|---|
| 4 | | 128 |
| | | 128 |

# F I G. 6B

| INPUT LEVEL | | PIXEL VALUE |
|---|---|---|
| 4 | | 192 |
| | | 64 |

# F I G. 7

MAIN SCANNING DIRECTION →

SUBSCANNING DIRECTION

# F I G. 8

EP 2 180 687 A1

```
                          IMAGE PROCESSING APPARATUS
┌──────────────────────────────────────────────────────────────────────────────┐
│                                                                                │
│         ┌───200─────────┐      ┌──101──────┐       ┌──102────┐                 │
│  ┌──────────────┐  │              │      │           │       │         │                 │
│  │              │  │ INPUT IMAGE  │IMAGE │ VERTICAL  │       │ INPUT   │                 │
│  │ ORIGINAL     │→ │ ANALYSIS     │DATA  │ RESOLUTION│→      │ γ       │                 │
│  │ IMAGE DATA   │  │ UNIT         │──────→│CONVERSION │       │CORRECTION│                │
│  │              │  │              │      │ UNIT      │       │ UNIT    │                 │
│  └──────────────┘  └──────┬───────┘      └───────────┘       └─────────┘                 │
│                           │                                                     │
│                           ● DETERMINATION SIGNAL                                │
│                                                                                │
│         ┌──────────────┐      ┌───────────┐       ┌─────────┐   ┌──────────┐   │
│         │ MULTI-LEVEL  │      │ OUTPUT    │       │ PWM     │   │ OUTPUT   │   │
│         │ ERROR        │→     │ PIXEL     │→      │PROCESSING│→ │ IMAGE    │→  │
│         │ DIFFUSION    │      │ SELECTION │       │ UNIT    │   │ DATA     │   │
│         │ PROCESSING   │      │ UNIT      │       │         │   └──────────┘   │
│         │ UNIT         │      │           │       │         │                 │
│         └──────────────┘      └───────────┘       └─────────┘                 │
│              203                  204                 105            2          │
└──────────────────────────────────────────────────────────────────────────────┘
```

# F I G. 9

| INPUT LEVEL | | PIXEL VALUE |
|:---:|:---:|:---:|
| 2 | ■ | 256 |
| | | 256 |
| 1 | ■ | 256 |
| | □ | 0 |
| 0 | □ | 0 |
| | □ | 0 |

EP 2 180 687 A1

Europäisches Patentamt
European Patent Office
Office européen des brevets

**EUROPEAN SEARCH REPORT**

Application Number

EP 09 17 3643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 343 305 A (RICOH KK [JP]) 10 September 2003 (2003-09-10) * abstract; figures 18-21 * ----- | 1 | INV. H04N1/405 |
| A | US 5 351 312 A (SATO SHINICHI [JP] ET AL) 27 September 1994 (1994-09-27) ----- | | |
| A | US 2002/039199 A1 (NOSE MASAKI [JP] ET AL) 4 April 2002 (2002-04-04) ----- | | |
| A | US 2006/017978 A1 (MINAMINO KATSUSHI [JP]) 26 January 2006 (2006-01-26) ----- | | |

TECHNICAL FIELDS
SEARCHED      (IPC)

H04N

The present search report has been drawn up for all claims

| Place of search | Date of completion of the search | Examiner |
|---|---|---|
| Berlin | 29 January 2010 | Kassow, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 09 17 3643

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2010

| Patent document cited in search report | | Publication date | Patent family member(s) | | Publication date |
|---|---|---|---|---|---|
| EP 1343305 | A | 10-09-2003 | DE 60305762 T2 | | 28-06-2007 |
| | | | JP 4014083 B2 | | 28-11-2007 |
| | | | JP 2003259120 A | | 12-09-2003 |
| | | | US 2003169455 A1 | | 11-09-2003 |
| US 5351312 | A | 27-09-1994 | NONE | | |
| US 2002039199 | A1 | 04-04-2002 | JP 4236804 B2 | | 11-03-2009 |
| | | | JP 2002112024 A | | 12-04-2002 |
| US 2006017978 | A1 | 26-01-2006 | JP 2006065834 A | | 09-03-2006 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9074488 A
- JP 2001309188 A